# EUROPÄISCHE PATENTSCHRIFT

(11) **EP 2 336 586 B1**
(45) Veröffentlichungstag und Bekanntmachung des Hinweises auf die Patenterteilung: **14.08.2013**
(21) Anmeldenummer: 09179247.3
(22) Anmeldetag: 15.12.2009
(51) Int. Cl.: F16D 1/072, F16D 1/08

(54) **Verfahren zum Erzeugen eines Presssitzes eines Bauteils auf einer Welle**
Method for creating a tight fit of a component to a shaft
Procédé de production d'un ajustage serré d'un composant sur un arbre

(43) Veröffentlichungstag der Anmeldung: 22.06.2011
(73) Patentinhaber: Maxon Motor AG, 6072 Sachseln (CH)
(72) Erfinder: Zimmermann, Martin, 4800 Zofingen (CH); Teimel, Arnold, 6074 Giswil (CH)
(74) Vertreter: Grünecker, Kinkeldey, Stockmair & Schwanhäusser

(56) Entgegenhaltungen:
- EP-A2- 0 280 671
- EP-A2- 1 387 734
- WO-A1-01/41136
- DE-A1- 3 741 497
- DE-A1- 10 155 491
- DE-A1-102006 026 551
- US-A1- 2009 134 131

## Beschreibung

Die vorliegende Erfindung betrifft ein Verfahren zum Erzeugen eines Presssitzes eines Bauteils mit einer Befestigungsbohrung auf einer Welle für einen Kleinstmotor. Ferner betrifft die vorliegende Erfindung auch eine Verbindung zwischen einer Welle und einem Nabenbauteil für einen Kleinstmotor wobei zumindest die Welle oder das Nabenbauteil nach dieses Verfahren hergestellt ist.

In der Antriebstechnik ist es häufig nötig, Antriebselemente, wie Ritzel oder Zahnriemenscheiben, oder auch Kugellager, an einer bestimmten Stelle auf der Antriebswelle des Rotors genau zu positionieren. Dafür werden bisher mehrere verschiedene Verfahren eingesetzt.

Eine gängige Möglichkeit besteht darin, die Welle und die Bohrung des zu positionierenden Teils so zu tolerieren, dass direkt eine Pressverbindung entsteht. Bei Motorwellen bedeutet dies teilweise lange Presswege mit der Gefahr des Ausknickens der Welle oder spezielle, für die Pressung abgesetzte Wellen, was höhere Herstellkosten und bedingt durch die Herstelltechnologie auch Nachteile im Rundlauf zum abgesetzten Bereich mit sich bringt.

Ferner ist es auch bekannt, das zu positionierenden Teil auf die Welle aufzustecken und festzukleben oder mit Laserschweißen zu fixieren. Häufig wird dazu ein zusätzlicher Ring, beispielsweise aus Kunststoff, eingesetzt, der ebenfalls eine Presspassung zur Welle hat, sich aber leicht verschieben lässt. Dieser zusätzliche Ring hält das zu positionierende Teil, also z.B. das Ritzel oder das Kugellager, während des Befestigungsvorgangs, also während des Klebens oder Schweißens, in Position. Dieses zusätzliche Teil bedeutet zusätzliche Bauteilkosten, erfordert Bauraum und eine zusätzliche Montageoperation.

Es ist auch bekannt, die Bohrung des auf der Welle zu positionierenden Teils durch eine Prägung zu deformieren. Das zu positionierende Teil kann dann nur unter Krafteinwirkung auf der Welle verschoben werden. Dies erfordert entsprechend präzise Prägewerkzeuge. So ist in der DE 10 2006 026 551 A1 ein Verfahren beschrieben, bei dem mit einer Nadel trichterförmige Vertiefungen in einer Wellenoberfläche erzeugt werden. Das dabei verdrängte Material bildet Materialaufwerfungen auf der Wellenoberfläche, auf die ein weiteres Bauteil, z.B. ein Kugellager, aufgesteckt wird.

Die WO 01/41136 A1 zeigt einen Toleranzring, der aus einem ebenen Materialstreifen in zylindrische Form gebogen ist und elliptische Vorsprünge aufweist. Der Toleranzring kann auf eine Welle aufgesteckt werden, um darauf eine Nabe zu befestigen.

Die DE 101 55 491 A1 offenbart ein Verfahren, bei dem ein Rohrstück auf einem Wellenende befestigt wird. Das Wellenende weist durch Materialabtragung erzeugte kalottenförmige Erhebungen auf. Das Rohr wird auf das Wellenende aufgeschoben und mit einem Pressstempel mit dem Wellenende verpresst.

Zudem ist auch ein Aufschrumpfverfahren bekannt. Bei dem Aufschrumpfverfahren wird das zu positionierende Teil zunächst erhitzt, so dass sich die Bohrung des zu positionierenden Teiles entsprechend dem Wärmeausdehnungskoeffizienten aufweitet. Das zu positionierende Teil kann dadurch leicht auf die Welle aufgebracht werden. Anschließend erkaltet das zu positionierende Teil an der gewünschten Position und zieht sich wieder zusammen, so dass das Bauteil einen festen Sitz an der gewünschten Position hat. Für Wellen im Durchmesserbereich < 5 mm ist dieses Verfahren aufgrund der hohen Anforderungen an die Toleranz der Teile technisch kaum realisierbar.

Es ist daher die Aufgabe der vorliegenden Erfindung, ein Verfahren bereitzustellen, das auch für kleine Bauteile eine genaue Positionierung der zu montierenden Bauteile auf der Welle ermöglicht und flexibel in der Anwendung ist.

Hierzu ist erfindungsgemäß vorgesehen, dass das Verfahren die folgenden Schritte umfasst:
- partielles Aufschmelzen einer Innenfläche der Befestigungsbohrung des Bauteils und/oder einer Mantelfläche der Welle, so dass sich über die Innenfläche der Befestigungsbohrung und/oder über die Mantelfläche der Welle vorstehende, kalottenförmige Vorsprünge ausbilden,
- Abkühlen des Bauteils und/oder der Welle, so dass die kalottenförmigen Vorsprüngen erstarren, und
- Aufstecken des Bauteils auf die Welle, bis die Befestigungsbohrung in einem Befestigungsbereich der Welle liegt.

Zwar zeigt die WO 02/094497 A2 bereits ein Verfahren, um die Oberfläche von metallischen Werkstücken teilweise aufzuschmelzen und so die Oberflächenrauhigkeit zu erhöhen. Dabei werden aber Vertiefungen bzw. Löcher erzeugt, die teilweise von Vorsprüngen umgeben sind.

Der Begriff "Presssitz" bedeutet hier, dass der Durchmesser der Befestigungsbohrung des Bauteils kleiner ist als der Außendurchmesser der Welle in dem Bereich, in dem das Bauteil auf der Welle befestigt werden soll. Ist der Durchmesser der Bohrung wesentlich kleiner als der Durchmesser der Welle, so kann das Bauteil nur mittels erheblichem Kraftaufwand auf die entsprechende Stelle der Welle aufgebracht werden. Das Bauteil ist dann kraftschlüssig mit der Welle verbunden, es entsteht eine Presspassung. Ist der Durchmesser der Befestigung des Bauteils nur etwas kleiner als der Durchmesser der Welle im Befestigungsbereich, so kann das Bauteil mit geringem Kraftaufwand auf die Welle aufgesteckt werden und wird im Befestigungsbereich lediglich fixiert. Es handelt sich hierbei dann um eine Übergangspassung.

Bei dem erfindungsgemäßen Verfahren wird das Material des Bauteils in der Befestigungsbohrung oder an der Mantelfläche der Welle lokal verflüssigt. Die Oberflächenspannung der Schmelze führt dazu, dass sich das geschmolzene Material tropfenförmig zusammenzieht. Beim Abkühlen verfestigen bzw. erstarren die Schmelztropfen, es entstehen die kalottenförmigen Vorsprünge.

Bei dem erfindungsgemäßen Verfahren entstehen an der Innenfläche der Befestigungsbohrung und/oder an der Mantelfläche der Welle Punkte, die über die jeweiligen Flächen hervorstehen. Der Durchmesser der Welle wird also lokal vergrößert bzw. der Durchmesser der Befestigungsbohrung wird lokal verkleinert. Dadurch wird nur in diesem Bereich eine reibschlüssige bzw. kraftschlüssige Verbindung zwischen Welle und Bauteil erzeugt. Das Bauteil kann in den übrigen Bereichen der Welle leicht verschoben werden. Hier besteht kein Kontakt zwischen der Welle und dem Bauteil. Es ist daher möglich, das zu montierende Bauteil genau auf der Welle zu positionieren. Zudem ist das Verfahren flexibel in der Anwendung, der gewünschte Befestigungsbereich kann einfach erzeugt werden. Gegebenenfalls können auf der Welle mehrere Befestigungsbereiche ausgebildet werden. Es sind keine zusätzlichen Montagehilfsteile zum Befestigen des Bauteils auf der Welle erforderlich. Ferner wird eine optimale Bauraumnutzung ermöglicht. Für dieses Befestigungsverfahren sind keine dem Verschleiß unterliegenden mechanischen Umformwerkzeuge erforderlich. Da an der Welle keine Absätze erzeugt werden müssen, ist die Welle relativ günstig in der Herstellung, es wird ein guter Rundlauf der Welle erzielt. Bei dem Bauteil handelt es sich um ein Nabenteil, beispielsweise ein Ritzel, eine Zahnriemenscheibe, ein Kugellager, etc.

Vorteilhafterweise kann vorgesehen werden, dass das Bauteil oder die Welle zum Aufschmelzen punktuell mit einem Laserstrahl bestrahlt wird. Der Einsatz eines Laserstrahls ermöglicht ein genaues Positionieren. Die Schmelzpunkte können exakt an der gewünschten Position an der Welle bzw. in der Befestigungsbohrung des Bauteiles erzeugt werden.

In einer weiteren Verfahrensvariante kann vorgesehen werden, dass die Innenfläche der Befestigungsbohrung des Bauteils und/oder die Mantelfläche der Welle an mehreren Punkten aufgeschmolzen wird. Dadurch ist ein einfaches Erzeugen des Sitzes und damit eine sichere Verbindung zwischen dem Bauteil und der Welle möglicht, in dem eine geeignete Anzahl von Vorsprüngen am Umfang der Welle bzw. Bohrung erzeugt wird. Zudem wird die Presskraft über mehrere Verbindungspunkte zwischen Welle und Bohrung verteilt, so dass eine gleichmäßigere Belastung von Welle und Bohrung erreicht wird.

In noch einer weiteren Verfahrensvariante kann vorgesehen werden, dass die Energiezufuhr mittels des Laserstrahls so eingestellt wird, dass durch die entstehenden kalottenförmigen Vorsprünge die gewünschte Umfangsänderung der Befestigungsbohrung des Bauteils und/oder der Welle erzeugt wird. Durch eine Veränderung der Energie des Laserstrahls kann die Größe der aufgeschmolzenen Punkte einfach verändert werden, so dass die Vorsprünge in der gewünschten Höhe erzeugt werden und somit die gewünschte Presskraft erreicht wird. Mit dem erfindungsgemäßen Verfahren ist es somit sehr einfach möglich, das Bauteil bzw. die Welle so zu behandeln, dass die gewünschte Presskraft für den Presssitz zwischen Bauteil und Welle erreicht wird. Bei einer geringeren Energiezufuhr mittels des Laserstrahls werden kleinere Bereiche aufgeschmolzen, die kalottenförmigen Vorsprünge sind kleiner, somit ist auch die entstehende Fügekraft zwischen dem Bauteil und der Welle geringer. Wird mit dem Laserstrahl mehr Energie zugeführt, so werden größere Bereiche der Welle bzw. des Bauteils aufgeschmolzen, die kalottenförmigen Vorsprünge werden größer, somit nimmt auch die Fügekraft zwischen Bauteil und Welle zu.

Es kann ferner auch vorgesehen werden, dass das Bauteil zusätzlich stoffschlüssig an der Welle befestigt wird. So kann beispielsweise vorgesehen werden, dass das Bauteil zusätzlich mit der Welle verklebt, verschweißt oder verlötet wird. Dadurch wird, auch bei sehr kleinen Bauteilen, ein sicherer Halt des Bauteils auf der Welle erreicht. Vorteilhafterweise kann ferner vorgesehen werden, dass die kalottenförmigen Vorsprünge um den Umfang der Befestigungsbohrung bzw. der Welle herum verteilt angeordnet sind. Dadurch wird ein gleichmäßiger erhöhter Sitz zwischen Welle und Bauteil erzeugt. Es erfolgt eine gute Spannungsverteilung zwischen Bauteil und Welle, die Montage wird erleichtert und ein guter Rundlauf der Welle erzielt.

Zweckmäßigerweise kann ferner vorgesehen werden, dass in der Befestigungsbohrung bzw. an der Welle mehrere nebeneinander angeordnete Reihen der kalottenförmigen Vorsprünge ausgebildet werden. Hierdurch wird nur an bestimmten Bereichen zwischen dem Bauteil und der Welle ein Presssitz erzeigt. Dünnwandige bzw. empfindliche Bereiche des zu positionierenden Bauteils können außerhalb der Presszone angeordnet werden und werden daher in ihrer Maßhaltigkeit nicht beeinflusst. Handelt es sich bei dem zu montierenden Bauteil um ein Kugellager, so sollte die Laufbahn in der Kugel außerhalb der Presszone liegen.

Die vorliegende Erfindung betrifft ferner auch eine Welle für einen Kleinstmotor, zur Verwendung in dem erfindungsgemäßen Verfahren. Es ist auch hier die Aufgabe der vorliegenden Erfindung, eine Welle bereitzustellen, die eine genaue Positionierung des zu montierenden Nabenteils auf der Welle ermöglicht und flexibel in der Anwendung ist.

Hierzu ist erfindungsgemäß vorgesehen, dass die Welle eine Verbindungsfläche zur Erzeugung eines Presssitzes mit einem eine Anlagefläche aufweisenden Nabenteil aufweist und die Verbindungsfläche mit kalottenförmigen Vorsprüngen auf der Mantelfläche der Welle ausgebildet ist und die Anlagefläche eine Befestigungsbohrung des Nabenteils ist, wobei die kalottenförmigen Vorsprünge über die Mantelfläche der Welle herausragen.

Der Durchmesser der Welle ist im Bereich der Verbindungsfläche lokal verändert. In dem Bereich der Verbindungsfläche ist somit also eine reibschlüssige Verbindung mit dem zweiten Nabenteil möglich. Dadurch wird ein genaues Positionieren der beiden Bauteile miteinander ermöglicht, die Anwendung ist sehr flexibel. Es sind keine zusätzlichen Montagehilfsteile erforderlich, eine optimale Bauraumnutzung wird ermöglicht. Für die Montage sind keine dem Verschleiß unterliegenden mechanischen Umformwerkzeuge erforderlich, es müssen keine Absätze an der Welle erzeugt werden. Die Welle ist daher günstig in der Herstellung und weist guten Rundlauf auf. In diesem Fall sind die Vorsprünge also auf der Welle angeordnet. Dies hat den Vorteil, dass sich die Welle einfach bearbeiten lässt.

In noch einer weiteren Ausgestaltung kann vorgesehen werden, dass die kalottenförmigen Vorsprünge um den Umfang der Welle bzw. der Befestigungsbohrung des Nabenteils verteilt sind. Der Presssitz wird also gleichmäßig über den Umfang der Welle bzw. der Befestigungsbohrung erzeugt. Dies führt zu einer guten Spannungs- bzw. Kräfteverteilung in der Welle und dem Nabenteil.

Zweckmäßigerweise kann ferner vorgesehen werden, dass die kalottenförmigen Vorsprünge in einer Reihe hintereinander angeordnet sind. Dadurch wird ein gleichmäßiger erhöhter Sitz auf der Welle bzw. in der Befestigungsbohrung erzeugt. Dies führt zu einer sehr guten Spannungs- bzw. Kräfteverteilung, erleichtert die Montage und führt zu einem guten Rundlaufverhalten der Welle.

In noch einer weiteren Ausführungsform kann vorgesehen werden, dass mehrere Reihen der kalottenförmigen Vorsprünge nebeneinander angeordnet sind. Dadurch wird nur in bestimmten Bereichen der Verbindungsfläche des ersten Wellen-Naben-Verbindungselements und der Anlagefläche des zweiten Wellen-Naben-Verbindungselements ein Presssitz erzeugt. Dünnwandige bzw. empfindliche Bereiche des zu positionierenden Bauteils liegen dann außerhalb der Presszone und werden nicht in ihrer Maßhaltigkeit beeinflusst.

Im Folgenden wird die Erfindung anhand von Zeichnungen näher erläutert. Es zeigen:

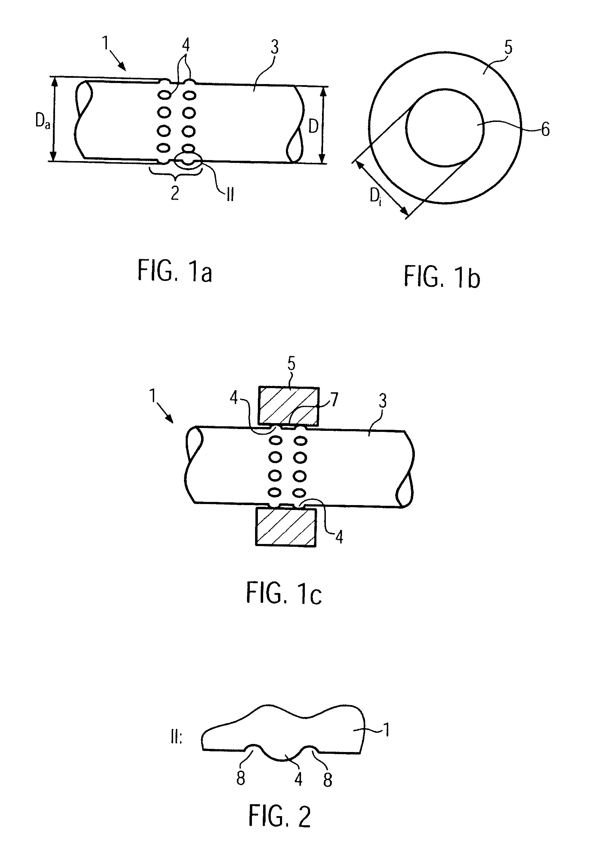

- Fig. 1a: Welle gemäß einer ersten Ausführungsform der Erfindung,
- Fig. 1 b: Nabenteil gemäß der ersten Ausführungsform der Erfindung,
- Fig. 1c: Wellen-Naben-Verbindung gemäß der ersten Ausführungsform der Erfindung mit der Welle aus Fig. 1a und dem Nabenteil aus Fig. 1b,
- Fig. 2: Detail II aus Fig. 1a,
- Fig. 3a: Welle gemäß einer zweiten Ausführungsform der Erfindung,
- Fig. 3b: Nabenteil gemäß der zweiten Ausführungsform der Erfindung und
- Fig. 3c: auf der Welle montiertes Nabenteil gemäß der zweiten Ausführungsform der Erfindung.

Fig. 1a zeigt einen Ausschnitt aus einer Welle 1 für einen Kleinstmotor. Solche Wellen haben üblicherweise einen Durchmesser von weniger als 5 mm. Bei der Welle 1 kann es beispielsweise um die Antriebswelle des Rotors des Kleinstmotors handeln. Hier ist es häufig nötig, Abtriebselemente wie Ritzel oder Zahnriemenscheiben, oder auch Kugellager an einer bestimmten Stelle auf der Antriebswelle 1 zu positionieren. Dafür ist auf der Welle 1 eine Verbindungsfläche 2 vorgesehen. Die Verbindungsfläche 2 erstreckt sich über einen Teil der Mantelfläche 3 der Welle 1. Im Bereich der Verbindungsfläche 2 sind auf der Mantelfläche 3 der Welle 1 Vorsprünge 4 ausgebildet. Die Vorsprünge 4 sind hügelförmig und weisen vorzugsweise Kalottenform auf. In der dargestellten Ausführungsform sind auf der Welle 1 zwei Reihen von Vorsprüngen 4 ausgebildet. In jeder Reihe sind die Vorsprünge 4 um den Umfang der Welle 1 verteilt hintereinander angeordnet. Die Vorsprünge 4 liegen also auf einer Kreisbahn auf der Mantelfläche 3 der Welle 1.

Fig. 1b zeigt das Bauteil 5, das auf der Welle 1 angebracht wird. Bei diesem Bauteil 5 kann es sich beispielsweise um ein Ritzel, eine Zahnriemenscheibe oder ein anderes Abtriebselement handeln. Das Bauteil 5 kann aber auch als Kugellager ausgebildet sein. Das Bauteil 5 weist eine Befestigungsbohrung 6 auf. Somit ist das Bauteil 5 als ein Nabenteil ausgebildet.

Fig. 1c zeigt die Welle 1 und das Bauteil 5 in montiertem Zustand. In Fig. 1c ist das Bauteil 5 teilweise geschnitten, so dass eine bessere Darstellung der Verbindung zwischen dem Bauteil 5 und der Welle 1 möglich ist. Das Bauteil 5 ist auf die Welle 1 aufgesteckt und die Innenfläche 7 der Befestigungsbohrung 6 des Bauteils 5 liegt auf der Verbindungsfläche 2 der Welle 1 auf. Da die kalottenförmigen Vorsprünge 4 über die Mantelfläche 3 der Welle 1 vorstehen, wird in diesem Bereich der Durchmesser der Welle 1 vergrößert. Der Außendurchmesser Dₐ der Welle 1 an den kalottenförmigen Vorsprüngen 4 ist größer als der Durchmesser Dᵢ der Befestigungsbohrung 6 in Bauteil 5. Das Bauteil 5 muss daher mit Kraftaufwand auf die Welle 1 bzw. die Verbindungsfläche 2 der Welle 1 aufgeschoben werden. Zwischen dem Bauteil 5 und der Welle 1 wird daher ein Presssitz erzeugt. Im vorliegenden Fall bedeutet der Begriff "Presssitz", dass zwischen der Welle 1 und der Befestigungsbohrung 6 des Bauteils 5 eine Übergangspassung oder eine Presspassung erzeugt wird. Bei der Übergangspassung wird das Bauteil 5 durch die Vorsprünge 4 auf der Welle 1 fixiert, muss aber anschließend noch durch eine stoffschlüssige Verbindung, also beispielsweise Kleben, Schweißen oder Löten, mit der Welle 1 verbunden werden. Ist der Außendurchmesser Dₐ der Welle 1 im Bereich der Verbindungsfläche 2 so groß, dass das Bauteil 5 lediglich durch eine kraftschlüssige Verbindung gehalten werden kann, so spricht man von einer Presspassung.

Bei diesen in den Fig. 1a-1c dargestellten Ausführungsbeispiel bildet die Welle 1 ein erstes Wellen-Naben-Verbindungselement, an dem die kalottenförmigen Vorsprünge 4 ausgebildet sind. Ein zweites Wellen-Naben-Verbindungselement wird durch das Bauteil 5 ausgebildet, wobei die Innenfläche 7 der Befestigungsbohrung 6 als Anlagefläche ausgebildet ist.

Fig. 2 zeigt das Detail II aus Fig. 1a. Wie in der Vergrößerung zu erkennen, sind neben den kalottenförmigen Vorsprüngen 4 Vertiefungen 8 ausgebildet. Die Vertiefungen 8 sind als Kreisring rund um die Vorsprünge 4 ausgebildet

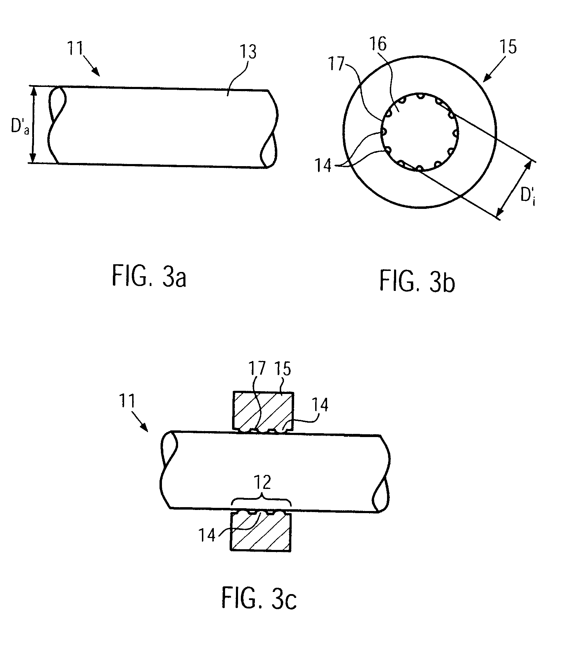

In den Fig. 3a-3c wird eine weitere Ausführungsform der Wellen-Naben-Verbindungselemente gezeigt. Im Folgenden werden nur die Unterschiede zu dem ersten Ausführungsbeispiel beschrieben.

Fig. 3a zeigt wiederum einen Ausschnitt einer Welle 11 für einen Kleinstmotor. Die Welle 11 weist eine glatte Mantelfläche 13 auf, der Außendurchmesser Dₐ' der Welle 11 ist also vorzugsweise über die gesamte Länge der Länge 11 konstant.

Fig. 3b zeigt ein als Nabenteil ausgebildetes Bauteil 15. Wie bereits beschrieben, kann es sich bei diesem Bauteil 15 um ein Ritzel oder eine Zahnriemenscheibe, also Antriebselemente, oder auch um Kugellager handeln. Wie auch das Bauteil 5 ist das Bauteil 15 vorzugsweise rotationssymmetrisch. Das Bauteil 15 weist eine Befestigungsbohrung 16 auf. An der Innenfläche 17 der Befestigungsbohrung 16 sind kalottenförmige Vorsprünge 14 ausgebildet. Auch hier sind die kalottenförmigen Vorsprünge 14 wieder von kreisringförmigen Vertiefungen (nicht dargestellt) umgeben. Die kalottenförmigen Vorsprünge 14 ragen ausgehend von der Innenfläche 17 der Befestigungsbohrung 16 ins Innere der Befestigungsbohrung 16. Hierdurch wird der Durchmesser der Befestigungsbohrung 16 verkleinert. Wie in Fig. 3c zu sehen ist, sind die Vorsprünge 14 vorzugsweise in Reihen entlang des Umfangs der Befestigungsbohrung 16 angeordnet und verlaufen somit auf einer Kreisbahn. Der Innendurchmesser Dᵢ' der Befestigungsbohrung 16 wird also durch die nach innen ragenden Vorsprünge 14 festgelegt.

Fig. 3c zeigt die Welle 11 und das Bauteil 15 im montierten Zustand. Das Bauteil 15 ist auf die Welle 11 aufgesteckt, so dass es genau an der dafür bestimmten Stelle bzw. Verbindungsfläche positioniert ist. Der Außendurchmesser Dₐ' der Welle 11 ist größer als der Innendurchmesser Dᵢ' der Befestigungsbohrung 16 des Bauteils 15, der durch die kalottenförmigen Vorsprünge 14 festgelegt wird. Auch hier ist es wieder möglich, Größe bzw. Höhe der kalottenförmigen Vorsprünge 14 so auszuwählen, dass das Bauteil 15 entweder auf die Welle 11 aufgeschoben werden kann und dort an der gewünschten Position fixiert ist, bevor es anschließend stoffschlüssig mit der Welle verbunden wird, oder aber die Höhe bzw. Größe der kalottenförmigen Vorsprünge 14 so auszulegen, dass das Bauteil 15 über eine Pressverbindung kraftschlüssig mit der Welle 11 verbunden ist.

Wie in Fig. 3c gezeigt, sind an der Innenfläche 17 der Befestigungsbohrung 16 drei Reihen von Vorsprüngen 14 ausgebildet. Die Vorsprünge 14 einer Reihe sind hintereinander angeordnet, so dass sie in der Bohrung 16 auf einer Kreisbahn verlaufen. Die Kreisbahnen sind vorzugsweise parallel zueinander. Dabei können die Vorsprünge 14 der einzelnen Kreisbahnen nebeneinander liegen oder versetzt zueinander angeordnet sind. Die Vorsprünge 14 müssen nicht in Reihen hintereinander angeordnet sein, die Anzahl von Vorsprüngen 14 wird je nach gewünschter Fügekraft ausgewählt. Auch die Anzahl von Reihen von Vorsprüngen 14 kann wie gewünscht ausgewählt werden.

In dem in Fig. 3a-3c dargestellten Ausführungsbeispiel ist das Bauteil 15 als erstes Wellen-Naben-Verbindungselement ausgebildet, die Verbindungsfläche wird durch die Innenwand der Befestigungsbohrung 16 ausgebildet, an der die kalottenförmigen Vorsprünge 14 angeordnet sind. Die Welle 11 bildet das zweite Wellen-Naben-Verbindungselement aus, an dessen Mantelfläche 13 die Anlagefläche für das Befestigungsteil 15 ausgebildet ist.

Im Folgenden wird anhand der Fig. 1a-1c das Verfahren zum Befestigen des Bauteils 5 auf der Welle 1 beschrieben. Dabei wird zunächst die Mantelfläche 3 der Welle 1 im Bereich der Verbindungsfläche 2 partiell aufgeschmolzen. Das Material der Welle 1 verflüssigt sich also in diesen Bereichen. Bedingt durch die Oberflächenspannung der Schmelze zieht sich die Schmelze in den aufgeschmolzenen Bereichen zusammen, so dass hügelartige Erhebungen, die kalottenförmigen Vorsprünge 4, entstehen. Durch dieses Zusammenziehen entsteht rund um jeden kalottenförmigen Vorsprung 4 eine kreisringförmige Vertiefung 8. Da kein zusätzliches Material aufgebracht wird, entspricht das Volumen der Vertiefung 8 dem Volumen des kalottenförmigen Vorsprungs 4. Die Welle 1 wird daraufhin abgekühlt, so dass die Schmelze erstarrt und die kalottenförmigen Vorsprünge 4 aushärten. Die kalottenförmigen Vorsprünge 4 stehen dann über die Mantelfläche 3 der Welle 1 hervor. Der Außendurchmesser Dₐ der Welle 1 ist durch die kalottenförmigen Vorsprünge 4 also größer als der Durchmesser D der Welle 1 in den nicht behandelten Bereichen.

Es wird nun das Bauteil 15 auf die Welle 1 aufgesteckt. Der Durchmesser D der Welle 1 ist etwas kleiner als der Innendurchmesser Dᵢ der Befestigungsbohrung 6 des Bauteils 5. Das Bauteil 5 kann daher einfach auf der Welle 1 verschoben werden. Der Außendurchmesser Dₐ der Welle 1 an der Verbindungsfläche 12, in der die kalottenförmigen Vorsprünge 4 liegen, ist größer als der Innendurchmesser Dᵢ der Befestigungsbohrung 6 des Bauteiles 5. Das Bauteil 5 muss also unter Kraftaufwendung auf die kalottenförmigen Vorsprünge 4 der Welle 1 aufgeschoben werden. Werden die kalottenförmigen Vorsprünge 4 dabei deformiert, so kann das verdrängte Material in die Vertiefungen 8 ausweichen. Im montierten Zustand liegt das Bauteil 5 auf den kalottenförmigen Vorsprüngen 4 der Welle auf.

Vorzugsweise wird zum partiellen Aufschmelzen der Welle 1 ein Laserstrahl eingesetzt. Der Laserstrahls wird nacheinander auf die Punkte gerichtet, an denen die kalottenförmigen Vorsprünge 4 entstehen sollen. Durch die Veränderung der über den Laserstrahl in die Welle eingeführten Energie kann die Größe der kalottenförmigen Vorsprünge 4 bestimmt werden. Wird mehr Energie zugeführt, so werden die kalottenförmigen Vorsprünge 4 größer, wird weniger Energie zugeführt, so werden kleinere kalottenförmige Vorsprünge 4 ausgebildet. Je nach Anzahl der bestrahlten Punkte und eingeleitete Energie kann so die erforderliche Montagekraft zwischen Bauteil 5 und Welle 1 eingestellt werden. Je nach Anzahl der bestrahlten Punkte und eingestellter Laserleistung kann so ein Schiebesitz oder eine Pressverbindung zwischen dem Bauteil 5 und der Welle 1 erreicht werden. Sind die kalottenförmigen Vorsprünge 4 klein, so dass der Außendurchmesser Dₐ der Welle 1 an den kalottenförmigen Vorsprüngen 4 nur wenig größer ist als der Durchmesser Dᵢ der Befestigungsbohrung 6 des Bauteils 1, so wird ein Schiebesitz erreicht. Das Bauteil 5 kann dann auf die Welle 1 aufgeschoben werden und wird über die kalottenförmigen Vorsprünge 4 dort gehalten. Um eine feste Verbindung zwischen der Welle 1 und dem Bauteil 5 zu erhalten, kann dann zusätzlich vorgesehen werden, das Bauteil 5 mit der Welle 1 zu verkleben, zu verschweißen oder zu verlöten. Das Bauteil 5 ist dann zusätzlich stoffschlüssig mit der Welle 1 verbunden.

Ist die Anzahl der kalottenförmigen Vorsprünge 4 höher bzw. sind die kalottenförmigen Vorsprünge 4 größer, so wird beim Aufstecken des Bauteils 5 auf die Welle 1 eine Presspassung erzeugt. Das Bauteil 5 ist dann kraftschlüssig mit der Welle 1 verbunden, es ist keine zusätzliche Verbindung zwischen dem Bauteil 5 und der Welle 1 nötig.

In dem in den Fig. 1a-1c dargestellten Ausführungsbeispiel werden zwei nebeneinander liegende Reihen von kalottenförmigen Vorsprüngen 4 ausgebildet. In jeder Reihe sind die kalottenförmigen Vorsprünge 4 am Umfang der Welle 1 verteilt hintereinander angeordnet. Die kalottenförmigen Vorsprünge liegen also in jeder Reihe auf einer Kreisbahn. Es kann auch vorgesehen werden, nur einzelne kalottenförmige Vorsprünge zu erzeugen, nur eine Reihe von kalottenförmigen Vorsprüngen 4 zu erzeugen oder die Vorsprünge 4 beliebig auf der Welle anzuordnen. Vorzugsweise wird dabei berücksichtigt, ob das Bauteil 5 dünnwandige oder empfindliche Bereiche aufweist, die nicht belastet werden können. Ist dies der Fall, so werden die kalottenförmigen Vorsprünge 4 so ausgebildet, dass diese dünnwandigen oder empfindlichen Bereiche außerhalb der Presszone liegen und nicht in ihrer Maßhaltigkeit beeinträchtigt werden.

Eine weitere Variante des Herstellverfahrens wird anhand der Fig. 3a-3c beschrieben. In dieser zweiten Variante des Verfahrens werden die kalottenförmigen Vorsprünge 14 nicht an der Welle, sondern an dem Bauteil 15 ausgebildet. Wie Fig. 3a zeigt, wird die Welle 11 nicht behandelt. Stattdessen wird die Innenfläche 17 der Befestigungsbohrung 16 des Bauteils 5 partiell aufgeschmolzen. Aufgrund der Oberflächenspannung der Flüssigkeit zieht sich die Schmelze an den aufgeschmolzenen Stellen zusammen. Es bilden sich also kalottenförmige Vorsprünge 14. Die Vorsprünge 14 sind von Vertiefungen (nicht gezeigt) umgeben. Wie auch bei dem bereits beschriebenen Verfahren sind die kalottenförmigen Vorsprünge 14 beabstandet voneinander, so dass sich die Schmelze lokal zusammenziehen kann. Auch hier kann zum Aufschmelzen des Materials ein Laserstrahl eingesetzt werden. Die Innenfläche 17 der Befestigungsbohrung 16 des Bauteils 15 wird dann punktuell mit einem Laserstrahl bestrahlt. An den bestrahlten Punkten schmilzt das Material des Bauteils 15 und zieht sich zu den kalottenförmigen Vorsprüngen 14 zusammen.

Wie Fig. 3b zeigt, werden mehrere über dem Umfang der Befestigungsbohrung 16 verteilte Stellen mit dem Laserstrahl aufgeschmolzen. Die Energiezufuhr zu dem Bauteil 15 durch den Laserstrahl wird so eingestellt, dass die kalottenförmigen Vorsprünge 14 die gewünschte Größe erreichen. Wird mehr Energie zugeführt, so werden größere Bereiche aufgeschmolzen, die Vorsprünge 14 werden größer. Wird weniger Energie zugeführt, so werden kleinere Bereiche aufgeschmolzen, die Vorsprünge 14 werden kleiner. Es können mehrere über den Umfang der Befestigungsbohrung 16 verteilte Vorsprünge 14 erzeugt werden. Durch die zugeführte Energie und die Anzahl der aufgeschmolzenen Stellen kann die gewünschte Umfangsänderung an der Befestigungsbohrung 16 erreicht werden. Vorzugsweise ist der Abstand zwischen zwei benachbarten Vorsprünge 14 identisch, so dass die Vorsprünge 14 gleichmäßig über den Umfang der Befestigungsbohrung 16 verteilt sind.

Fig. 3c zeigt, dass die Vorsprünge 14 in nebeneinander liegenden Reihen ausgebildet sind. Im dargestellten Fall sind drei Reihen von Vorsprüngen 14 ausgebildet. Die Anzahl der Reihen ist allerdings variabel.

Nach dem partiellen Aufschmelzen der Innenfläche 17 der Befestigungsbohrung 16 wird das Bauteil 15 wieder abgekühlt, so dass die kalottenförmigen Vorsprünge 14 erstarren. Der durch die kalottenförmigen Vorsprünge 14 festgelegte Innendurchmesser Dᵢ' der Befestigungsbohrung 16 ist dann kleiner als der Außendurchmesser Dₐ' der Welle 11. Das Bauteil 15 wird dann auf die Welle 11 aufgesteckt und genau an der gewünschten Position positioniert. Durch die Auswahl einer geeigneten Anzahl von Vorsprüngen 14 mit der geeigneten Größe der Vorsprünge 14 kann die Montagekraft zum Befestigen des Bauteils 15 auf der Welle 11 eingestellt werden. So kann beispielsweise eingestellt werden, dass das Bauteil 15 noch mit geringem Kraftaufwand auf der Welle 11 verschiebbar ist. Das Bauteil 15 wird dann auf die Welle 11 aufgesteckt und an der gewünschten Stelle positioniert. Die Vorsprünge 14 sorgen für eine Fixierung des Bauteils 15 an der Welle 11. Anschließend wird das Bauteil 15 mit der Welle 1 noch verklebt, verschweißt oder verlötet, dass zusätzlich eine stoffschlüssige Verbindung entsteht.

Die Anzahl der Vorsprünge 14 bzw. die Größe der Vorsprünge 14 kann aber auch so ausgebildet werden, dass das Bauteil 15 nur mit größerem Kräfteaufwand auf die Welle 11 aufgesteckt werden kann. Das Bauteil 15 wird dann über eine Pressverbindung auf der Welle 11 gehalten.

Da zum Erzeugen der Vorsprünge 14 Welle 1 bzw. in der Befestigungsbohrung 16 des Bauteils 15 ein Laser eingesetzt wird, kann die Form und Position der Vorsprünge 14 sehr einfach eingestellt werden.

## Patentansprüche

1. Verfahren zum Erzeugen eines Presssitzes eines Bauteils (5; 15) mit einer Befestigungsbohrung (6; 16) auf einer Welle (1; 11) für einen Kleinstmotor umfassend die folgenden Schritte:
- partielles Aufschmelzen einer Innenfläche (17) der Befestigungsbohrung (16) des Bauteils (15) und/oder einer Mantelfläche (3) der Welle (1), so dass sich über die Innenfläche (17) der Befestigungsbohrung (16) und/oder über die Mantelfläche (3) der Welle (1) vorstehende, kalottenförmige Vorsprünge (4; 14) ausbilden,
- Abkühlen des Bauteils (15) und/oder der Welle (1), so dass die kalottenförmigen Vorsprünge (4; 14) erstarren, und
- Aufstecken des Bauteils (5; 15) auf die Welle (1; 11) bis die Befestigungsbohrung (6; 16) in einem Befestigungsbereich (2; 12) der Welle (1; 11) liegt.

2. Verfahren nach Anspruch 1, **dadurch gekennzeichnet, dass** das Bauteil (15) oder die Welle (1) zum Aufschmelzen punktuell mit einem Laserstrahl bestrahlt wird.

3. Verfahren nach einem der Ansprüche 1 oder 2, **dadurch gekennzeichnet, dass** die Innenfläche (17) der Befestigungsbohrung (16) des Bauteils (15) und/oder die Mantelfläche (3) der Welle (1) an mehreren Punkten aufgeschmolzen wird.

4. Verfahren nach einem der Ansprüche 2 oder 3, **dadurch gekennzeichnet, dass** die Energiezufuhr mittels des Laserstrahls so eingestellt wird, dass durch die entstehenden kalottenförmigen Vorsprünge (4; 14) die gewünschte Umfangsänderung der Befestigungsbohrung (17) des Bauteils (15) und/oder der Welle (1) erzeugt wird.

5. Verfahren nach einem der Ansprüche 1 bis 4, **dadurch gekennzeichnet, dass** das Bauteil (5; 15) zusätzlich stoffschlüssig an der Welle (1; 11) befestigt wird.

6. Verfahren nach einem der Ansprüche 1 bis 5, **dadurch gekennzeichnet, dass** die kalottenförmigen Vorsprünge (4; 14) um den Umfang der Befestigungsbohrung (16) bzw. der Welle (1) verteilt angeordnet sind.

7. Verfahren nach einem der Ansprüche 1 bis 6, **dadurch gekennzeichnet, dass** in der Befestigungsbohrung (16) bzw. an der Welle (1) mehrere nebeneinander angeordnete Reihen der kalottenförmigen Vorsprünge (14; 4) ausgebildet werden.

8. Verbindung zwischen einer Welle (1; 11) und einem Nabenbauteil (5, 15) für einen Kleinstmotor, **dadurch gekennzeichnet, dass** zumindest eines der Verbindungselemente, d.h., die Welle (1; 11) oder das Nabenbaute (5; 15), nach dem Verfahren gemäß Anspruch 1 bis 7 hergestellt ist.

9. Verbindung nach Anspruch 8, **dadurch gekennzeichnet, dass** auf der Mantelfläche (3) der Welle (1) eine Verbindungsfläche (2) mit kalottenförmigen Vorsprüngen (4) ausgebildet ist und dass das Nabenbauteil (5) mit einer als Anlagefläche (7) ausgebildeten Befestigungsbohrung (6) versehen ist.

10. Verbindung nach Anspruch 8, **dadurch gekennzeichnet, dass** in einer Befestigungsbohrung (16) des Nabenbauteils (15) eine Verbindungsfläche (17) mit den kalottenförmigen Vorsprüngen (14) ausgebildet ist, und die Welle (11) mit einer an der Mantelfläche (13) ausgebildeten Anlagefläche (12) versehen ist.

11. Verbindung nach einem der Ansprüche 8 bis 10, **dadurch gekennzeichnet, dass** die kalottenförmigen Vorsprünge (4; 14) um den Umfang der Welle (1) bzw. der Befestigungsbohrung (16) des Nabenbauteils (15) verteilt sind.

12. Verbindung nach einem der Ansprüche 8 bis 11, **dadurch gekennzeichnet, dass** die kalottenförmigen Vorsprünge (4; 14) in einer Reihe hintereinander angeordnet sind.

13. Verbindung nach einem der Ansprüche 8 bis 12, **dadurch gekennzeichnet, dass** mehrere Reihen der kalottenförmigen Vorsprünge (4; 14) nebeneinander angeordnet sind.

## Claims

1. Method for producing a press fit of a component (5; 15) with a mounting hole (6; 16) on a shaft (1; 11) for a micro motor, comprising the following steps:
- partially fusing an inner surface (17) of the mounting hole (16) of the component (15) and/or a lateral surface (3) of the shaft (1) such that dome-shaped projections (4; 14) protruding beyond the inner surface (17) of the mounting hole (16) and/or beyond the lateral surface (3) or the shaft (1) form,
- cooling the component (15) and/or the shaft (1) such that the dome-shaped projections (4; 14) solidify, and
- pushing the component (5;15) onto the shaft (1; 11) until the mounting hole (6; 16) is located in a fastening region (2; 12) of the shaft (1; 11).

2. Method according to claim 1, **characterised in that** the component (15) or the shaft (1) is irradiated with a laser beam at certain points thereof for the purpose of fusing.

3. Method according to either claim 1 or claim 2, **characterised in that** the inner surface (17) of the mounting hole (16) of the component (15) and/or the lateral surface (3) of the shaft (1) are fused at a plurality of points.

4. Method according to either claim 2 or claim 3, **characterised in that** the energy supplied by the laser beam is adjusted such that the resultant dome-shaped projections (4; 14) lead to the desired change in the circumference of the mounting hole (17) of the component (15) and/or in the circumference of the shaft (1).

5. Method according to any of claims 1 to 4, **characterised in that** the component (5; 15) is additionally fixed to the shaft (1; 11) in a firmly bonded manner.

6. Method according to any of claims 1 to 5, **characterised in that** the dome-shaped projections (4; 14) are arranged such that they are distributed over the circumference of the mounting hole (16) and of the shaft (1), respectively

7. Method according to any of claims 1 to 6, **characterised in that** a plurality of side-by-side rows of the dome-shaped projections (14; 4) are formed in the mounting hole (16) and on the shaft (1) respectively.

8. Connection between a shaft (1; 11) and a hub component (5, 15) for a micro motor, **characterised in that** at least one of the connection elements, i.e. the shaft (1; 11) or the hub component (5; 15), is produced according to the method according to claims 1 to 7.

9. Connection according to claim 8, **characterised in that** a joint face (2) with dome-shaped projections (4) is formed on the lateral surface (3) of the shaft (1), and **in that** the hub component (5) is provided with a mounting hole (6) configured as a contact surface (7).

10. Connection according to claim 8, **characterised in that** a joint face (17) with the dome-shaped projections (14) is formed in a mounting hole (16) of the hub component (15), and the shaft (11) is provided with a contact surface (12) formed on the lateral surface (13).

11. Connection according to any of claims 8 to 10, **characterised in that** the dome-shaped projections (4; 14) are distributed over the circumference of the shaft (1) and of the mounting hole (16) of the hub component (15), respectively.

12. Connection according to any of claims 8 to 11, **characterised in that** the dome-shaped projections (4; 14) are arranged one after the other in a row.

13. Connection according to any of claims 8 to 12, **characterised in that** a plurality of rows of said dome-shaped projections (4; 14) are arranged side-by-side.

## Revendications

1. Procédé de production d'un ajustage serré d'un composant (5 ; 15) avec un trou de fixation (6 ; 16) sur un axe (1 ; 11) pour un micro-moteur, comprenant les étapes suivantes :
- fusion partielle d'une surface interne (17) du trou de fixation (16) du composant (15) et/ou d'une surface latérale (3) de l'axe (1), de telle sorte que des projections saillantes en forme de calotte (4 ; 14) sont formées au-dessus de la surface interne (17) du trou de fixation (16) et/ou au-dessus de la surface latérale (3) de l'axe (1),
- refroidissement du composant (15) et/ou de l'axe (1) de telle sorte que les projections en forme de calotte (4 ; 14) se solidifient, et
- glissement du composant (5 ; 15) sur l'axe (1 ; 11) jusqu'à ce que le trou de fixation (6 ; 16) se trouve dans une zone de fixation (2 ; 12) de l'axe (1 ; 11).

2. Procédé selon la revendication 1, **caractérisé en ce que** le composant (15) ou l'axe (1) est irradié ponctuellement par un rayon laser pour produire la fusion.

3. Procédé selon l'une des revendications 1 ou 2, **caractérisé en ce que** la surface interne (17) du trou de fixation (16) du composant (15) et/ou la surface latérale (3) de l'axe (1) sont fondues en plusieurs points.

4. Procédé selon l'une des revendications 2 ou 3, **caractérisé en ce que** l'apport d'énergie au moyen du rayon laser est réglé de telle sorte que la modification circonférentielle souhaitée du trou de fixation (17) du composant (15) et/ou de l'axe (1) est produite par les projections en forme de calotte (4 ; 14) résultantes.

5. Procédé selon l'une des revendications 1 à 4, **caractérisé en ce que** le composant (5 ; 15) est en outre fixé avec un ajustement ferme sur l'axe (1 ; 11).

6. Procédé selon l'une des revendications 1 à 5, **caractérisé en ce que** les projections en forme de calotte (4 ; 14) sont distribuées sur la périphérie du trou de fixation (16) ou de l'axe (1).

7. Procédé selon l'une des revendications 1 à 6, **caractérisé en ce que** plusieurs rangées de projections en forme de calotte (14 ; 4) agencées les unes à côté des autres sont formées dans le trou de fixation (16) ou sur l'axe (1)).

8. Connexion entre un axe (1 ; 11) et un composant de moyeu (5, 15) pour un micro-moteur, **caractérisée en ce qu'**au moins un des éléments de connexion, c'est-à-dire l'axe (1 ; 11) ou le composant de moyeu (5 ; 15), est fabriqué selon le procédé d'une des revendications 1 à 7.

9. Connexion selon la revendication 8, **caractérisée en ce qu'**une surface de connexion (2) comportant des projections en forme de calotte (4) est constituée sur la surface latérale (3) de l'axe (1) et **en ce que** le composant de moyeu (5) est pourvu d'un trou de fixation (6) constitué sous forme d'une surface de contact (7).

10. Connexion selon la revendication 8, **caractérisée en ce qu'**une surface de connexion (17) comportant des projections en forme de calotte (14) est constituée dans un trou de fixation (16) du composant de moyeu (15), et **en ce que** l'axe (11) est pourvu d'une surface de contact (12) constituée sur la surface latérale (13).

11. Connexion selon l'une des revendications 8 à 10, **caractérisée en ce que** les projections en forme de calotte (4 ; 14) sont distribuées sur la périphérie de l'axe (1) ou du trou de fixation (16) du composant de moyeu (15).

12. Connexion selon l'une des revendications 8 à 11, **caractérisée en ce que** les projections en forme de calotte (4 ; 14) sont agencées l'une derrière l'autre sur une rangée.

13. Connexion selon l'une des revendications 8 à 12, **caractérisée en ce que** plusieurs rangées de projections en forme de calotte (4 ; 14) sont agencées les unes à côté des autres.
